## Europäisches Patentamt
## European Patent Office
## Office européen des brevets

(19)

(11) Numéro de publication: **0 090 725**
**B1**

(12)

# FASCICULE DE BREVET EUROPEEN

(45) Date de publication du fascicule du brevet:
10.07.85

(51) Int. Cl.⁴: **F 22 B 37/00, G 01 N 27/90**

(21) Numéro de dépôt: **83400598.5**

(22) Date de dépôt: **23.03.83**

(54) Dispositif de contrôle de la plaque tubulaire d'un échangeur de chaleur.

(30) Priorité: **26.03.82 FR 8205170**

(43) Date de publication de la demande:
**05.10.83 Bulletin 83/40**

(45) Mention de la délivrance du brevet:
**10.07.85 Bulletin 85/28**

(84) Etats contractants désignés:
**BE CH DE GB IT LI SE**

(56) Documents cités:
**FR - A - 2 250 994**
**FR - A - 2 320 542**
**FR - A - 2 482 728**
**GB - A - 1 488 833**
**US - A - 4 303 884**

(73) Titulaire: **FRAMATOME ET CIE., Tour Fiat 1, Place de la Coupole, F-92400 Courbevoie (FR)**

(72) Inventeur: **Dumont, Pascal, 2 rue Salvator Allende, F-71530 Chatenoy Le Royal (FR)**

(74) Mandataire: **Mongrédien, André et al, c/o BREVATOME 25, rue de Ponthieu, F-75008 Paris (FR)**

## Description

L'invention concerne un dispositif de contrôle de la plaque tubulaire d'un échangeur de chaleur.

Les échangeurs de chaleur tels que les générateurs de vapeur des réacteurs nucléaires à eau sous pression comportent une plaque tubulaire de grande épaisseur sur laquelle est monté le faisceau tubulaire.

Les tubes du faisceau traversent la plaque depuis sa face d'entrée en contact avec le fluide primaire, jusqu'à sa face de sortie en contact avec le fluide secondaire.

Dans les générateurs de vapeur des réacteurs nucléaires à eau sous pression, l'eau primaire arrive dans la boite à eau dont une des parois est constituée par la face d'entrée de la plaque tubulaire sur laquelle affleurent les extrémités des tubes.

De l'eau alimentaire est introduite dans la partie du générateur de vapeur sitée au-dessus de la plaque tubulaire et vient en contact avec les tubes du faisceau à l'intérieur desquels circule le fluide primaire. La chaleur du fluide primaire permet la vaporisation de l'eau alimentaire.

La face de sortie de la plaque tubulaire est recouverte par un revêtement inoxydable.

Après le montage du faisceau tubulaire, il est nécessaire de contrôler l'état de la plaque tubulaire, et en particulier, de contrôler la zone de cette plaque tubulaire située sous le revêtement, des défauts pouvant apparaître dans cette zone.

Le contrôle doit se faire à partir de la boite à eau de générateur de vapeur, c'est-à-dire à partir de la face d'entrée de la plaque tubulaire.

Des sondes de contrôle doivent donc être introduites dans chacun des tubes traversant la plaque tubulaire successivement pour effecteur le contrôle de la zone située au voisinage de la face de sortie de la plaque tubulaire, autour du tube considéré.

Les sondes doivent donc pouvoir se déplacer en translation à l'intérieur du tube sur toute la traversée de la plaque tubulaire, cette traversée étant de l'ordre de 600 mm, et en roation autour de l'axe du tube pour effectuer le contrôle de la portion de plaque tubulaire située autour du tube.

On connaît des dispositifs d'inspection des tubes d'un générateur de vapeur constitués par un ensemble pouvant se déplacer en translation dans le tue grâce à un câble poosèdant une rigidité suffisante pour exercer une poussée sur le dispositif d'inspection (FR-A-2 320 542). Ce dispositif peut être introduit dans chacun des tubes successivement et comporte un support muni de moyens de fixation sur la face d'entrée de la plaque tubulaire.

Le but recherché étant de faciliter le passage du dispositif d'inspection sur toute la longueur du tube qui est plié en U à sa partie supérieure, la partie active du dispositif comportant la sonde de contrôle présente des moyens du guidage permettant à cette partie active de suivre la courbure du tube.

On ne peut cependant assurer ainsi un très bon centrage de la sonde dans le tube.

Dans le cas de l'inspection des défauts sous revêtement de la plaque tubulaire, de tels dispositifs ne sont pas satisfaisants car on recherche avant tout un centrage parfait de la sonde au niveau de la face de sortie de la plaque tubulaire puisque la sonde est alors mise en rotation autour de l'axe du tube pour inspecter la zone de la plaque tubulaire située à la périphérie du tube.

Dans le brevet FR-A-2 482 728, est décrit un dispositif de contrôle d'une plaque tubulaire de générateur de vapeur comportant une sonde et un ensemble d'entrainement de la sonde pour la déplacer à l'intérieur des tubes traversant la plaque tubulaire. La sonde est portée par un ensemble de guidage comportant un seul jeu de billes disposées à 120° autour de l'axe du tube et saillantes vers l'extérieur pour venir en contact avec la paroi du tube. L'ensemble d'entraînement de la sonde est placé dans l'axe du tube dans lequel on effectue le contrôle, l'arbre sur lequel est fixée la sonde étant engagé, sans possibilité de désalignement, dans cet ensemble d'entrainement.

Pour l'inspection de la plaque tubulaire, au niveau des tubes périphériques qui sont très proches les uns des autres, on ne peut assurer une disposition convenable des moyens de déplacement de la sonde. Il en est ainsi à cause de la forme bombée du fond du générateur de vapeur constituant la paroi externe de la boite à eau. D'autre part, le centrage de l'ensemble de guidage de la sonde n'est pas parfait, lorsqu'on utilise un seul jeu de billes de guidage.

Le but de l'invention est donc de proposer un dispositif de contrôle de la plaque tubulaire d'un échangeur de chaleur sur laquelle est monté un aisceau de tubes traversant la plaque depuis sa face d'entrée sur laquelle affleurent les tubes jusqu'à sa face de sortie par où ressortent les tubes du faisceau, le contrôle de la plaque tubulaire étant effectué depuis l'intérieur de chacun des tubes du faisceau successivement, dispositif comportant une partie motrice montée sur un support muni de moyens de fixation sur la face d'entrée de la plaque tubulaire et entraînée en rotation et en translation suivant l'axe des tubes par des moyens d'entraînement fixés sur le support et une partie active constituée par un arbre central portant une sonde de contrôle et au moins une douille de guidage montée rotative sur l'arbre, autour de l'axe de cet arbre confondu avec l'axe du tube dans lequel la partie active est introduite et guidée en rotation et en translation dans le tube grâce à des billes logées dans des ouvertures de la douille, saillante vers l'extérieur de la douille et disposée à 120° autour de l'axe de la douille, ce dispositif de contrôle permettant un centrage parfait de la sonde dans les tubes et l'inspection de la zone périphérique de la plaque tubulaire, malgré la forme bombée du fond de l'échangeur de chaleur.

Dans ce but, la douille comporte dans sa paroi latérale, au moins deux ensembles espacés suivant la direction axiale, de trois ouvertures disposées à 120° renfermant chacune une bille et la partie active est reliée à la partie motrice par une articulation permettant un désalignement entre l'axe de la partie active et l'axe de rotation de la partie motrice.

Afin de bien faire comprendre l'invention, on va maintenant décrire à titre d'exemples non limitatifs, en se reportant aux figures jointes en annexe, deux modes de réalisation d'un dispositif de contrôle suivant l'invention, utilisable pour le contrôle de la plaque tubulaire d'un générateur de vapeur d'un réacteur nucléaire à eau sous pression.

La figure 1 représente l'extrémité d'un dispositif de contrôle suivant l'invention dans une vue avec coupe partielle par un plan de symétrie.

La figure 2 représente un dispositif selon l'invention, suivant une première variante, en position de travail à l'intérieur d'une plaque tubulaire de forte épaisseur.

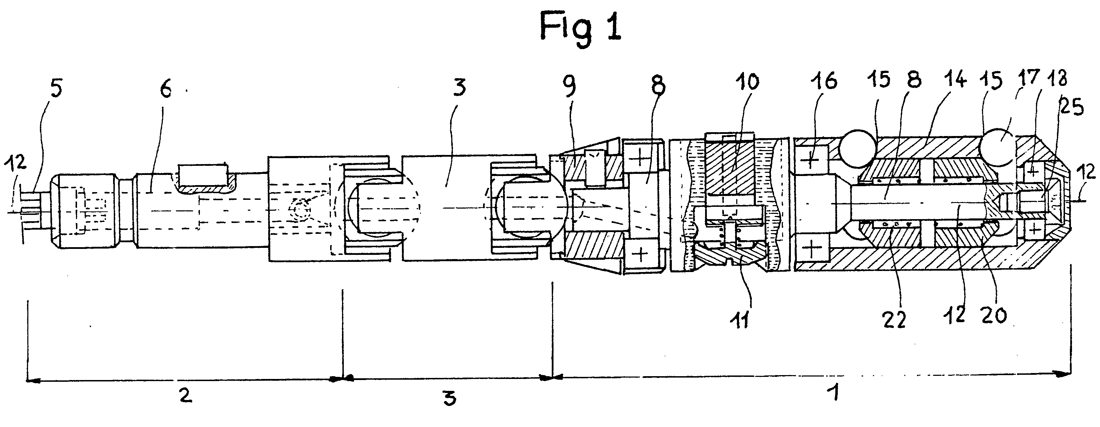

Sur la figure 1, on voit l'extrémité d'un dispositif de contrôle suivant l'invention comportant la partie active 1 de celui-ci, l'extrémité 2 de la partie motrice et l'articulation 3 faisant la jonction entre la partie motrice et la partie active.

La partie motrice comporte un câble 5 d'une rigidité suffisante pour exercer une poussée sur le dispositif de contrôle et pour l'entraîner en rotation à l'intérieur d'un tube. Le câble 5 servant à l'alimentation de la sonde et au recueil des informations de cette sonde est relié à une pièce de jonction 6 qui est elle-même reliée de façon articulée à la partie active 1 par l'intermédiaire de la pièce 3.

La pièce 3 est réalisée sous la forme d'une double articulation à cardan permettant de transmettre les mouvements de rotation et de translation du câble 5 à la partie 1 du dispositif de contrôle, même dans le cas où un certain désalignement existe entre la partie motrice et la partie active du dispositif de contrôle.

La partie active du dispositif de contrôle comporte un arbre central 8 relié par l'intermédiaire d'une pièce de jonction 9 à l'articulation 3.

Sur une partie élargie de cet arbre 8 est fixée une sonde à courant de Foucault 10 grâce à une vis 11. La sonde 10 est ainsi solidaire de l'arbre central 8.

Sir l'extrémité de l'arbre 8 est montée rotative autour de l'axe 12 du dispositif une douille 14, grâce à des paliers à billes 16 et 18.

La douille 14 comporte des ouvertures 15 recevant chacune une bille 17 maintenue légèrement saillante par rapport à la surface externe de la douille 14, grâce à une coupelle annulaire 20 en deux parties maintenues écartées l'une de l'autre par un ressort 22.

Les ouvertures 15 permettent le maintien des billes à l'intérieur de la douille 14, tout en les laissant mobiles en rotation à l'inérieur de leur logement.

Les ouvertures 15 sont disposées suivant trois rangées de dirction axiale disposées à 120° sur la surface latérale de la douille 14.

Le diamètre externe de la douille à billes ainsi constituée correspond exactement au diamètre intérieur des tubes du faisceau, si bien que cette douille à billes peut réaliser un guidage parfait de la partie active du dispositif de contrôle à l'intérieur du tube.

En effet, les deux jeux de trois billes à 120° espacées suivant la direction axiale de la partie active 1 permettent un centrage parfait de cette partie active donc de la sonde 10 à l'intérieur du tube et indépendamment de tout autre élément de guidage.

Une vis 25 permet l'assemblage de la partie active du dispositif de contrôle.

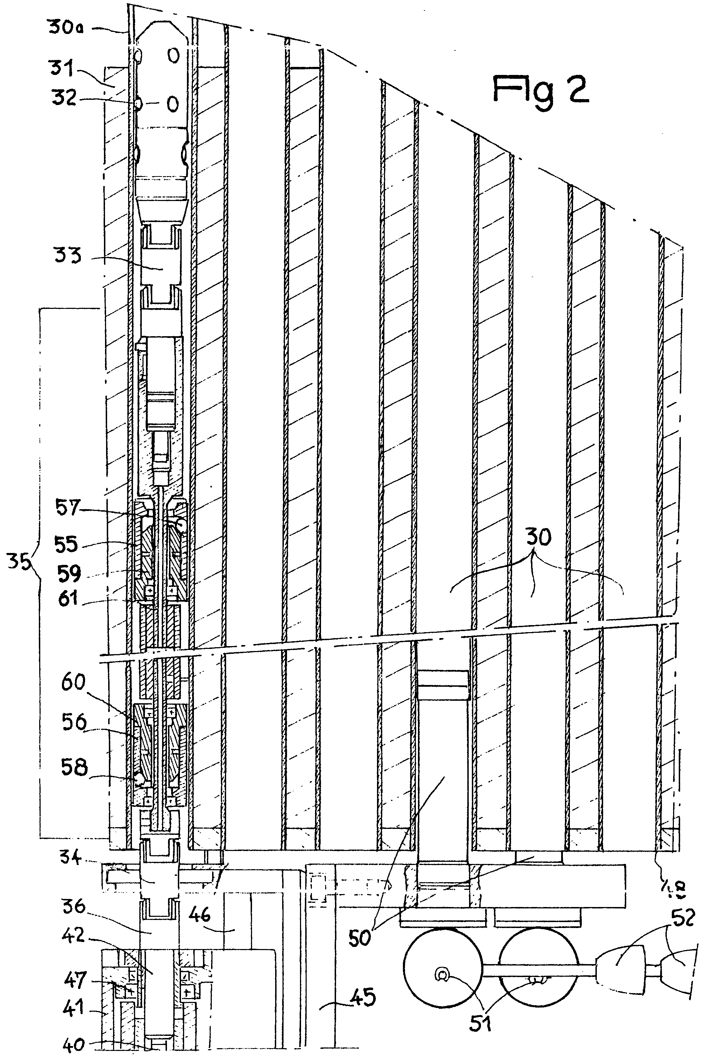

Le dispositif de contrôle représenté à la figure 2, en position de travail à l'intérieur d'un tube 30a traversant la plaque tubulaire 31 d'un générateur de vapeur de très forte épaisseur, comporte une partie active 32 et une articulation 33, en tout point identiques à la partie active 1 et à l'articulation 3 représentées sur la figure 1.

Pour permettre un meilleur guidage du dispositif de contrôle à l'intérieur du tube dans sa traversée de la plaque de forte épaisseur, la pièce de raccordement 36 de la partie motrice du dispositif de contrôle est reliée à l'articulation 33 par l'intermédiaire d'une seconde pièce d'articulation 34 et d'un ensemble de guidage intermédiaire 35.

Dans le dispositif représenté à la figure 1, la pièce de raccordement intermédiaire 6 équivalente de la pièce 36 était raccordée directement à la pièce d'articulation 3 équivalente de la pièce d'articulation 33.

Le dispositif de raccordement intermédiaire 35 permet un meilleur guidage du dispositif de contrôle à l'intérieur de la plaque tubulaire.

La partie motrice du dispositif de contrôle est constituée par un câble rigide 40 pour l'alimentation de la sonde et le recueil des informations relié à la pièce de liaison 36 elle-même montée mobile en rotation autour de l'axe 42 à l'intérieur d'un dispositif de support 41.

Le support 41 est monté mobile en translation dans la direction de l'axe 42, sur un support fixe 45 grâce à une colonne de guidage 46.

Des moyens moteurs permettent de mettre en rotation autour de l'axe 42 la partie motrice du dispositif de contrôle et d'autres moyens moteurs permettent le déplacement en translation de l'ensemble 41 sur lequel la partie motrice est montée rotative par l'intermédiaire d'un palier à roulement 47.

Le support 45 est fixé sur la face d'entrée 48 de la plaque tubulaire 31 par deux mandrins 50 engagés dans des tubes 30 de faisceau disposés au voisinage du tube 30a dans lequel on effectue l'inspection et manoeuvrés par des excentriques 51 solidaires de poignées d'actionnement 52.

L'ensemble de contrôle peut ainsi être dèplacé d'une zone à une autre de la plaque tubulaire et fixé sur celle-ci pour l'inspection de la plaque tubulaire par l'intérieur des tubes disposés dans la zone correspondante.

L'ensemble de guidage 35 comporte, en dehors des pièces extrêmes de liaison aux articulations 33 et 34, deux douilles de guidage 55 et 56 comportant chacune trois ouvertures à 120° renfermant des billes 57 et 58 maintenues légèrement saillantes par rapport à la surface externe des douilles 55 et 56 par des coupelles 59 et 60. Les douilles 55 et 56 sont montées rotatives sur un arbre central 61 par l'intermédiaire de paliers à roulement.

L'arbre central 61 est relié à chacune de ses extrémités à l'une des pièces de liaison de la partie de guidage 35 aux articulations 33 et 34.

Le dispositif suivant l'invention permet un guidage et un centrage parfaits de la sonde à l'intérieur du tube dans lequel elle est engagée, grâce aux deux jeux de trois billes à 120° espacés suivant la longueur de la douille de guidage de la partie active du dispositif.

Dans le cas d'une plaque de forte épaisseur, comme représenté à la figure 2, on améliore encore le guidage en prévoyant d'autres douilles de guidage entre la partie motrice et la partie active du dispositif.

Le guidage du dispositif à l'intérieur du tube est d'autre part totalement indépendant des moyens d'entrainement en rotation et translation solidaires du support fixé sur la face d'entrée de la plaque tubulaire.

Il peut exister un désalignement entre l'axe de la partie motrice et l'axe de la partie active, grâce aux articulations à cardan joignant ces deux parties du dispositif.

En particulier, pour l'examen de la partie périphérique de la plaque tubulaire, le dispositif suivant l'invention permet de déplacer le dispositif d'inspection en translation et en rotation, tout en plaçant les moyens d'entrainement du dispositif légèrement vers l'intérieur de la plaque tubulaire. On peut donc accèder ainsi aux tubes périphériques de la plaque tubulaire malgré la forme bombée du fond fermant la boite à eau du générateur de vapeur.

L'invention ne se limite pas aux modes de réalisation qui viennent d'être décrits; elle en comporte au contraire toutes les variantes.

C'est ainsi qu'on peut imaginer l'utilisation d'une partie de guidage d'une longueur quelconque composée d'un nombre de douilles quelconque suivant l'épaisseur de la plaque tubulaire à inspecter.

On peut également imaginer des moyens de déplacement en rotation et en translation quelconques de la partie motrice du dispositif; cette partie motrice peut être constituée par une pièce de liaison rigide sur laquelle est raccordé un câble ou par un câble rigide entrainé en translation et en rotation.

Dans le cas de l'inspection des défauts sous revêtement d'une plaque tubulaire de forte épaisseur, on utilise de préférence une sonde à courants de Foucault mais il est également possible d'utiliser le dispositif suivant l'invention pour le déplacement d'une sonde quelconque permettant l'inspection d'une plaque tubulaire.

Enfin, le dispositif suivant l'invention peut être utilisé non seulement pour l'inspection des plaques tubulaires des générateurs de vapeur des réacteurs nucléaires à eau sous pression mais également pour l'inspection des plaques tubulaires d'autres types d'échangeurs de chaleur.

**Revendications**

1. Dispositif de contrôle de la plaque tubulaire d'un échangeur de chaleur sur laquelle est monté un faisceau de tubes traversant la plaque depuis sa face d'entrée (48) sur laquelle affleurent les tubes (30) jusqu'à sa face de sortie par où ressortent les tubes (30) du faisceau, le contrôle de la plaque tubulaire étant effectué depuis l'intérieur de chacun des tubes (30) du faisceau successivement, dispositif comportant une partie motrice (5, 40) montée sur un support (41) muni de moyens de fixation (50, 51, 52) sur la face d'entrée (48) de la plaque tubulaire et entrainée en rotation et en translation suivant l'axe des tubes par des moyens d'entrainement fixés sur le support (41) et une partie active (1, 32) constituée par un arbre central (8) portant une sonde de contrôle (10) et au moins une douille de guidage (14) montée rotative sur l'arbre (8), autour de l'axe de cet arbre (8) confondu avec l'axe du tube (30) dans lequel la partie active (1, 32) est introduite et guidée en rotation et en translation dans le tube (30) grâce à des billes (17) logées dans des ouvertures de la douille, saillantes vers l'extérieur de la douille (14) et disposées à 120° autour de l'axe de la douille (14), caractérisé par le fait que la douille (14) comporte, dans sa paroi latérale, au moins deux ensembles espacés suivant la direction axiale, de trois ouvertures (15) disposées à 120° renfermant chacune une bille (17) et que la partie active (1) est reliée à la partie motrice (5) par une articulation (3) permettant un désalignement entre l'axe de la partie active (1, 32) et l'axe de rotation de la partie motrice (5, 40).

2. Dispositif de contrôle suivant la revendication 1, caractérisé par le fait qu'entre la partie motrice (40) et la partie active (32) du dispositif est disposé un ensemble de guidage (35) constitué par au moins une douille de guidage (55, 56) montée rotative sur un arbre central intermédiaire (61) dirigé suivant l'axe du tube (30a) et comportant, dans sa paroi latérale, des ouvertures à 120° renfermant chacune une bille saillante vers l'extérieur (57, 58) pour son roulement sur la surface intérieure du tube (30a), l'arbre central intermédiaire (61) étant relié à ses extrémités par l'intermédiaire d'articulations (33, 34), à la partie motrice (40) et à la partie active (32) du dispositif, respectivement.

3. Dispositif de contrôle suivant l'une quelconque des revendications 1 et 2, dans le cas du contrôle de la zone située sous le revêtement de la face de sortie d'une plaque tubulaire d'un générateur de vapeur d'un réacteur à eau sous pression, caractérisé par le fait que la sonde est une sonde à courants de Foucault.

4. Dispositif de contrôle suivant l'une quelconque des revendications 1, 2 et 3, caractérisé par le fait que la partie motrice du dispositif est constituée au moins partiellement par un câble rigide (5, 40).

**Patentansprüche**

1. Einrichtung zur Inspektion der Rohrplatte eines Wärmetauschers, an der ein Rohrbündel angebracht ist, das die Platte von dessen Eingangsseite (48) aus, auf der die Rohre (30) bündig fluchten, bis zu dessen Austrittsseite, auf der die Rohre (30) austreten, durchquert und bei der die Inspektion der Rohrplatte jeweils vom Inneren jedes Rohrs des Bündels sukzessive erfolgt, wobei die Überwachungsvorrichtung einen Antriebsteil (5, 40), der auf einem Träger (41) befestigt ist, der mit Mitteln (50, 51, 52) zur Befestigung auf der Eingangsseite (48) der Rohrplatte versehen ist und durch auf dem Träger (41) befestigte Antriebsmittel in Rotations- und Translationsbewegung längs der Rohrachsen versetzt wird, und einen aktiven Teil (1, 32) aufweist, der aus einer zentralen Welle (8), die eine Inspektionssonde (10) trägt und aus mindestens einer drehbar an der Welle (8) angelenkten Führungsbuchse (14), die um die Achse dieser Welle (8), die auf der Achse des Rohrs (30) liegt, angeordnet ist, besteht, wobei der aktive Teil (1, 32) in dieses Rohr (30) eingeführt und über Kugeln (17) bei Rotation und Translation in dem Rohr (30) geführt ist und wobei die Kugeln (17) in Öffnungen der Buchse zur Außenseite der Buchse (14) hin vorstehend und um 120° zueinander beabstandet um die Buchsenachse herum angeordnet sind, dadurch gekennzeichnet, daß die Buchse (14) in ihrer Seitenwand mindestens zwei in Axialrichtung beabstandete Gruppen von je drei um 120° zueinander beabstandete, jeweils eine Kugel (17) aufnehmende Öffnung aufweist und daß der aktive Teil (1) über ein Gelenk (3) mit dem Antriebsteil (5) befestigt ist, wodurch eine Fluchtabweichung zwischen der Achse des aktiven Teils (1, 32) und der Drehachse des Antriebsteils (5, 40) ermöglicht wird.

2. Inspektionseinrichtung nach Anspruch 1, dadurch gekennzeichnet, daß zwischen dem Antriebsteil (40) und dem aktiven Teil (32) der Einrichtung eine Führungsanordnung (35) angebracht ist, die mindestens aus einer drehbar auf einer zwischengeschalteten zentralen Welle (61) gelagerten Führungsbuchse (55, 56) besteht, die längs der Achse des Rohrs (30a) geführt ist und die in ihrer Seitenwand um 120° beabstandete Öffnungen aufweist, die jeweils zum Rollen der Buchse auf der Innenwand des Rohrs (30a) eine nach außen vorstehende Kugel (57, 58) enthalten, wobei die zwischengeschaltete Welle (61) an ihren Enden jeweils über Gelenke (33, 34) mit dem Antriebsteil (40) und mit dem aktiven Teil (32) der Einrichtung verbunden ist.

3. Inspektionseinrichtung nach Anspruch 1 oder 2, für eine Inspektion des Bereichs unterhalb der Beschichtung der Austrittsfläche einer Rohrplatte eines Wärmetauschers eines Druckwasserreaktors, dadurch gekennzeichnet, daß die Sonde eine Sonde für Foucault'sche Wirbelströme ist.

4. Inspektionseinrichtung nach einem der Ansprüche 1 bis 3, dadurch gekennzeichnet, daß der Antriebsteil der Einrichtung wenigstens teilweise aus einem steifen Kabel (50, 40) besteht.

**Claims**

1. Device for inspecting a heat-exchanger tube plate, on which is mounted a bundle of tubes passing through the plate from its inlet face (48) with which the tubes (30) are flush up to its outlet face where the tubes (30) of the bundle emerge again, the tube plate being inspected from the interior of each of the tubes (30) of the bundle in succession, the said device comprising a driving part (5, 40), mounted on a support (41) provided with means (50, 51, 52) of fastening to the inlet face (48) of the tube plate and driven in rotation and in translation along the axis of the tubes by drive means fastened to the support (41), and an active part (1, 32) consisting of a central shaft (8) carrying an inspection probe (10) and at least one guide bush (14) mounted rotatably on the shaft (8) about the axis of this shaft (8) merged with the axis of the tube (30), into which the active part (1, 32) is introduced and guided in rotation and in translation in the tube (30) by means of balls (17) which are accomodated in orifices of the bush and project towards the outside of the bush (14) and which are arranged at 120° about the axis of the bush (14), characterised in that the bush (14) has in its side wall at least two sets, spaced in the axial direction, of three orifices (15) arranged at 120°, each containing a ball (17), and in that the active part (1) is connected to the driving part (5) by means of a joint (3) allowing the axis of the active part (1, 32) and the axis of rotation of the driving part (5, 40) to be put out of alignment with one another.

2. Inspection device according to Claim 1, characterised in that, located between the driving part (40) and the active part (32) of the device is a guide assembly (35) consisting of at least one guide bush (55, 56), the latter being mounted rotatably on an intermediate central shaft (61) directed along the axis of the tube (30a) and having in its side wall orifices at 120°, each containing an outward-projecting ball (57, 58), allowing it to roll on the inner surface of the tube (30a), the intermediate central shaft (61) being connected at its ends by means of joints (33, 34) to the driving part (40) and to the active part (32) of the device respectively.

3. Inspection device according to either of Claims 1 and 2, with regard to the inspection of the zone located under the covering of the outlet face of a tube plate of a steam generator of a pressurised-water reactor, characterised in that the probe is an eddy-current probe.

4. Inspection device according to any one of Claims 1, 2 and 3, characterised in that the driving part of the device consists at least partially of a rigid cable (5, 40).

6

Fig 1

Fig 2